Europäisches Patentamt

European Patent Office

Office européen des brevets

(11) Publication number: 0 366 502
A2

# (12) EUROPEAN PATENT APPLICATION

(21) Application number: 89311153.4

(22) Date of filing: 30.10.89

(51) Int. Cl.5: B29C 35/08 , B29C 41/04

(30) Priority: 28.10.88 AU 1212/88

(43) Date of publication of application:
02.05.90 Bulletin 90/18

(84) Designated Contracting States:
AT BE CH DE ES FR GB GR IT LI LU NL SE

(71) Applicant: JAMES HARDIE & COY PTY
LIMITED
1 Grand Avenue
Camellia New South Wales 2142(AU)

(72) Inventor: Carlstrom, Bengt Ingmar
Srerneckstrasse 45,
Klagenfurt(AT)
Inventor: Search, Barry George
8, Philip Place
Carlingford, N.S.W.(AU)
Inventor: Sanegor, Joseph
1/36-38 Noble Street
Allawah, N.S.W.(AU)
Inventor: Beard, Geoffrey Edward
17, Bedford Road
North Epping, N.S.W.(AU)
Inventor: Belcher, Warwick Rodney
157, Boundary Road
North Epping, N.S.W.(AU)

(74) Representative: Pilch, Adam John Michael et
al
c/o D. Young & Co. 10 Staple Inn
London WC1V 7RD(GB)

(54) Centrifugal casting of hollow articles.

(57) Apparatus for centrifugal casting of hollow articles, in particular pipes formed from polyester and other resins. The apparatus has an elongate generally cylindrical hollow mould (20) with a centre conductor (24) extending along the longitudinal axis so that the combination acts as a coaxial waveguide. A microwave source (1) and waveguide system are provided to direct substantially TEM mode radiation into one end of the mould (20). The mould (20) and the centre conductor (24) are terminated at the other end by a short circuit (25) to microwave radiation so that standing waves are established in the mould (20). Also described is a method of centrifugal casting of such articles in which a casting composition is placed in the hollow mould (20) which is made to rotate, and microwave radiation is directed into the mould (20) to heat the casting composition.

Fig 1

# CENTRIFUGAL CASTING OF HOLLOW ARTICLES

This invention relates to apparatus for and methods of centrifugal casting of hollow articles such as pipes. Although embodiments of this invention will hereinafter be described primarily with reference to the manufacture of centrifugally cast glass filament reinforced pipes, the invention is also applicable to other types of centrifugally cast pipes and other centrifugally cast articles.

In a previously-proposed centrifugal casting process for glass reinforced plastics pipes, liquid resin and hardening agent are placed inside a rotating cylindrical mould along with the required reinforcements and fillers in the appropriate order and amounts. The centrifugal force created by the rotation causes the solid materials to migrate through the liquid resin to the outer wall and compact in the normal way. The glass filaments usually take some minutes to compact fully due to the high viscosity of the liquid resin and the large specific surface area of the glass filaments. After an adequate delay, heat is applied to the pipe either by blowing heated air along the bore of the uncured pipe or by applying heat to the outside of the mould through an appropriate medium such as heated air, oil or water. The heating accelerates the triggering of the curing of the resin and hardener. In either case, the heat is conducted through the surface of the pipe and must spread through the rest of the pipe wall by conduction. This is a slow process as most plastics are poor thermal conductors. These processes also often result in uneven heating of the pipe resulting in some parts of the pipe curing more slowly than others.

According to one aspect of the invention there is provided apparatus for centrifugal casting of hollow articles, the apparatus comprising a hollow rotatable mould, means for generating microwave radiation and transmission means for directing said microwave radiation into the mould whilst the mould is rotating to heat casting material disposed therein.

According to a second aspect of the invention there is provided a method of centrifugal casting of hollow articles, the method comprising the steps of placing a casting composition in a hollow rotating mould and directing microwave radiation into said rotating mould to heat the casting material.

A preferred embodiment of this invention provides a centrifugal casting apparatus, and a method of centrifugal casting, which will overcome or at least ameliorate the disadvantages arising in the previously-proposed process.

Preferably the microwave radiation is generated by a substantially conventional magnetron and directed to the mould by a waveguide system. The waveguide system preferably includes a circulator and water load, together with a directional coupler fitted with power level detectors arranged to detect the power levels propagating in the forward and reverse directions. A means of tuning the section of the microwave transmission containing the casting materials so as to apply a suitable level of power to the material is preferably also included.

It is preferred that the waveguide system is coupled to the mould by means of a doubly-choked rotary joint surrounded by a secondary labyrinth radiation seal for RFI (radio frequency interference) minimisation purposes. A stationary short circuit termination is preferably provided at the end of the mould remote from the end coupled with the waveguide transmission system. The stationary termination is also preferably coupled with the mould by means of a doubly-choked rotary joint surrounded with a secondary labyrinth radiation seal for RFI minimisation purposes.

A centre conductor preferably extends along the length of the mould and into the waveguide system. In use the centre conductor preferably joins electrically with the stationary short circuit termination by means of a non-contacting, doubly choked, axial joint.

The microwave generator, waveguide system and centre conductor are preferably mounted on a moveable carriage so that they can be readily moved into position when required, but otherwise do not interfere with the moulding operations. The stationary short circuit termination is also preferably mounted on a similar carriage.

In use the microwave energy is used to heat the casting material to at least accelerate curing. This provides a number of advantages over conventional centrifugal casting including:

(i) The microwave energy heats the uncured pipe wall material directly throughout the thickness of the material.

(ii) The rate of heating can be readily controlled.

(iii) The amount of energy and hence heat applied can be easily measured as it is applied which allows more accurate control.

(iv) Because the microwave energy heats the casting material directly it is inherently more thermally efficient than prior art indirect heating methods.

(v) The loss tangent of liquid resin is significantly higher than that of cured resin. This property ensures that the microwave energy tends to dissipate preferentially in uncured resin rather than in resin already triggered. This property can be utilised to assist in obtaining relatively uniform microwave energy absorption within any pipe wall material during manufacture utilising microwave energy.

The above factors (ii) and (iii) allow the timing of the curing reaction to be accurately controlled. Together with factor (v), these result in improved consistency in product properties.

The invention is applicable to any centrifugally cast articles requiring heat to initiate or perform curing including but not limited ot articles made from polyester resins, vinylester resins, bis-phenol A resins and epoxy resins.

Some embodiments of this invention will now be described, by way of example only, with reference to the accompanying drawings, in which:

Figure 1 schematically shows the major components of an apparatus for centrifugal casting of pipes according to an embodiment of this invention;

Figure 2 schematically shows an apparatus similar to that shown in Figure 1 modified for use with a mould for making larger diameter pipes;

Figures 3a and 3b respectively show schematically two somewhat simplified examples of non-contacting transition waveguide sections forming part of apparatus embodying this invention;

Figure 4 schematically shows a sectioned view of non-contacting secondary radiation seal forming part of apparatus embodying this invention; and

Figures 5a and 5b respectively show schematically two examples of the application of a short circuiting apparatus forming part of apparatus embodying this invention.

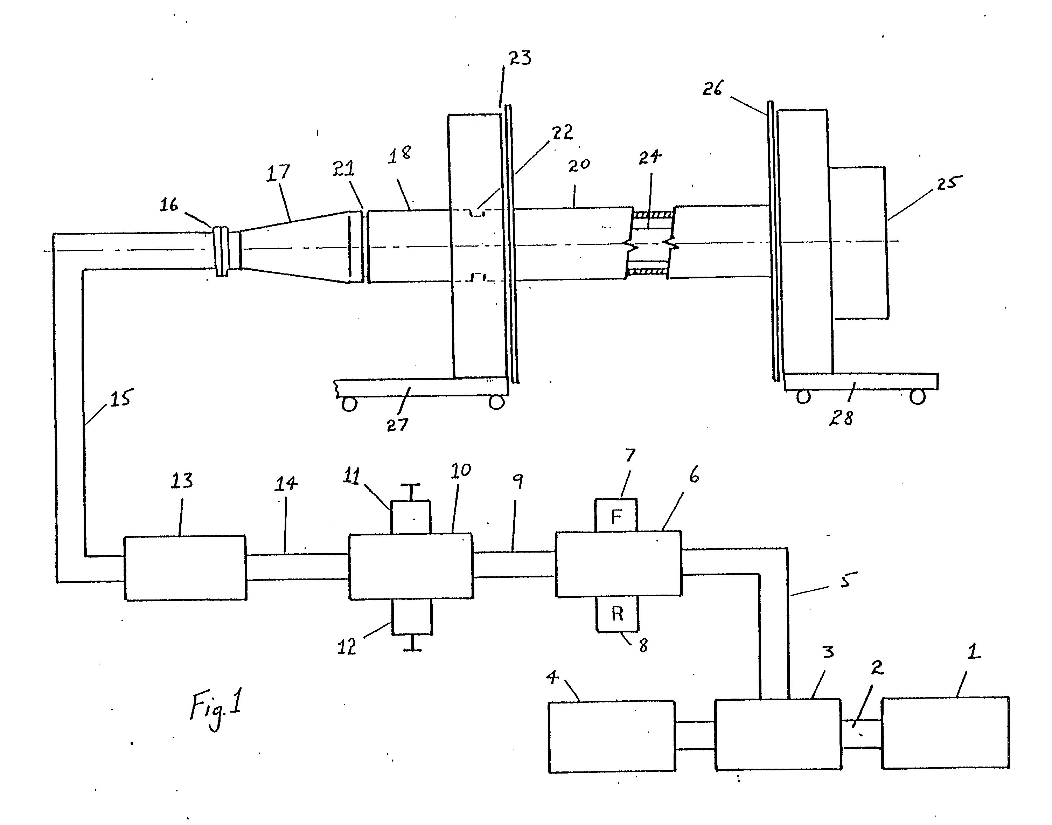

Referring firstly to Figure 1, the apparatus for centrifugal casting comprises a microwave generator 1 which takes the form of a substantially conventional magnetron and launcher (not shown). The generator 1 produces microwave energy in the 915 MHz band in the $TE_{10}$ mode which is launched into a section 2 of a WG4 waveguide for propagation to the input port of a suitable WG4 circulator 3 with a WG4 water load 4 connected to the return loss port. The microwave radiation propagates from the incident port of the WG4 circulator through a WG4 waveguide section 5 to a WG4 high-power directional coupler 6, fitted with power level detectors 7 and 8 arranged to detect the power levels propagating in the forward and reverse directions respectively. The WG4 directional coupler 6 is connected to further waveguide 9 which allows microwave radiation to propagate to a WG4 magic-tee tuner 10. Tuner 10 is fitted with two adjustable WG4 waveguide short circuit terminations 11 and 12 which enable tuning of the succeeding waveguide structure to or near resonance at 915 MHz.

The magic-tee tuner 10 is connected via waveguide 14 to a WG4 co-axial mode transducer 13 which changes the mode of propagation of the radiation in the succeeding waveguide transmission cavity from the $TE_{10}$ mode to the TEM mode. The microwave radiation within the co-axial portion of the mode transducer 13 will exist in TEM mode and other higher-order co-axial waveguide modes. The energy propagating from the mode transducer 13 will be predominantly in TEM mode. Mode purity is maintained by causing the radiation to propagate through a section of slowly-tapering co-axial line 15 in which the co-axial centre conductor (not shown) tapers slowly and in which the cross-sectional dimensions are small enough to inhibit propagation of any higher order co-axial waveguide modes generated within the mode transducer 13. That is, the slowly tapering co-axial line 15 acts as a mode fitter.

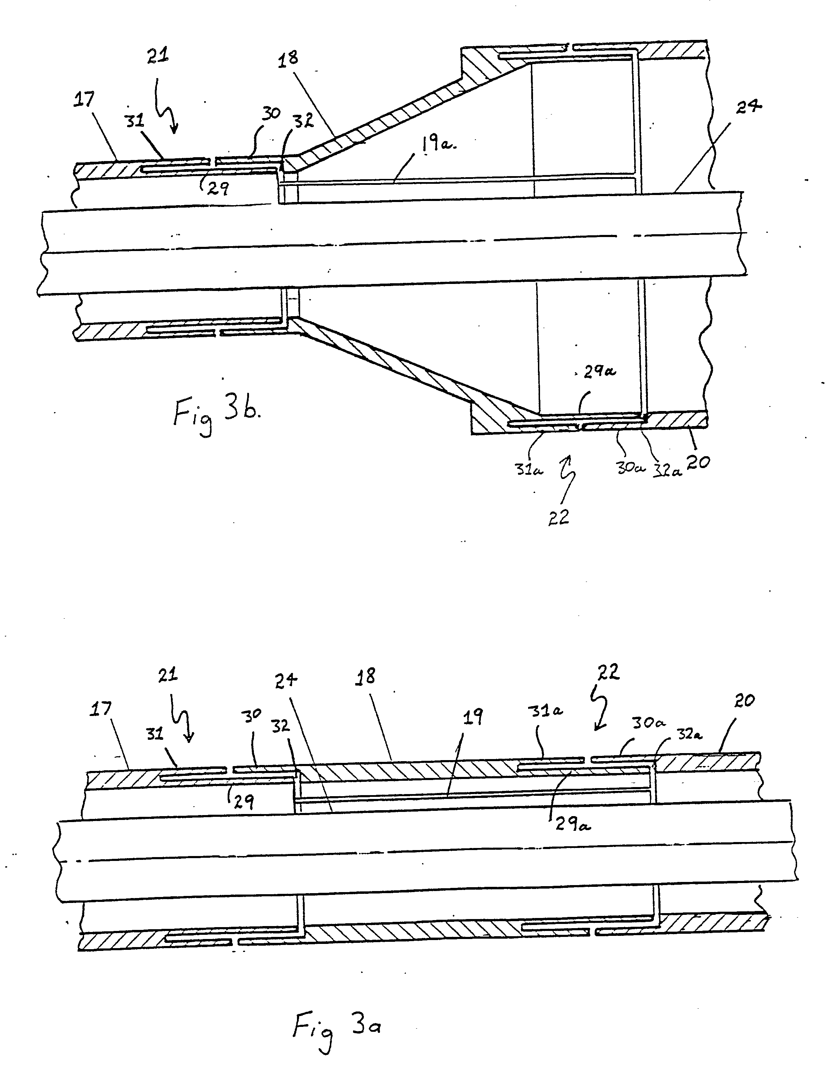

The tapered co-axial line 15 is connected to a tapered co-axial line 17, in which both co-axial outer and inner conductors taper in diameter, via a flanged joint 16. The section of line 17 is included to permit both inner and outer conductors to taper to diameters compatible with the input cross-sectional diameters of a transitional tapered waveguide 18 used to couple the waveguide system to a rotating mould 20. The taper in the co-axial line 17 is slow enough to ensure only minimal higher-order mode generation once cross-sectional dimensions reach a size where higher-order modes are above cut-off and their propagation within the structure is therefore possible. The tapered waveguide 18 is longitudinally split as shown at 19 and 19a in Figures 3a and 3b so as to be easily removed and replaced to provide a transitional coupling to moulds of differing sizes. In some applications line section 17 can be longitudinally split for ease of replacement.

The tapered waveguide 18 is coupled to the tapered line section 17 by a doubly-choked non-contacting rotary joint 21 and the rotating mould 20 via a further doubly-choked non-contacting rotary joint 22 and a surrounding labyrinth radiation seal shown at 23. In use tapered waveguide 18 remains stationary and rotating joint 21, described in detail below, is used as a means of providing a simple effective coupling which enables easy removal of the tapered waveguide 18 without the conduction problems associated with contacting waveguide joints.

The labyrinth radiation seal 23 ensures that any microwave energy radiated to the surrounding environment from the rotary joint 22 and surrounding labyrinth seal 23 is at an extremely low intensity.

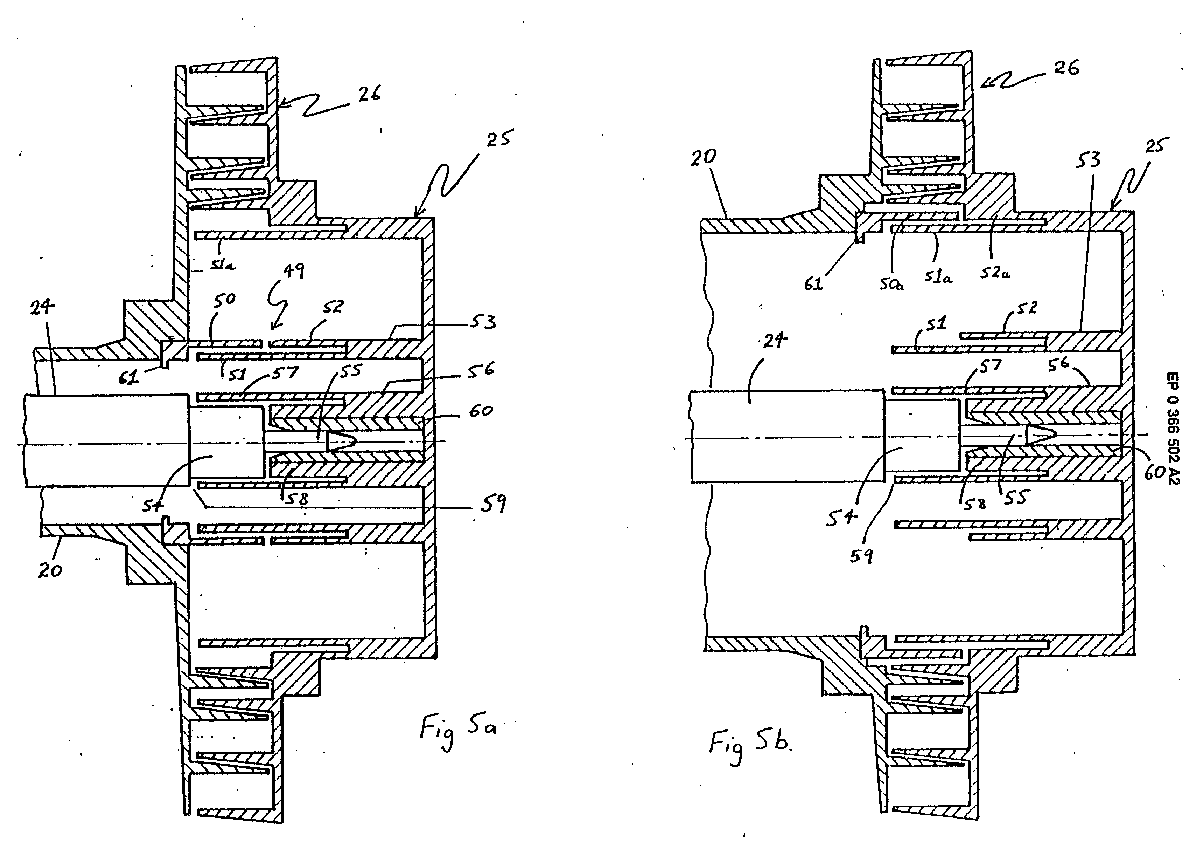

A centre conductor 24 of the co-axial feeding structure extends into the rotating mould 20 to form a further co-axial structure consisting of the centre conductor 24 and rotating mould 20. At the end of the mould remote from the microwave feed, both the mould 20 and co-axial centre conductor 24 are connected to a universal, multiple, short circuiting structure 25. The centre conductor 24 is coupled to the short circuit 25 by a non-contacting, double-choked, axial joint shown in detail in Figures 5a and 5b. The rotating mould 20 is coupled to the short circuit 25 by a further non-contacting, doubly-choked rotary joint shown in Figures 5a and 5b. Surrounding the universal multiple short circuiting structure 25 is a second non-contacting, labyrinth radiation seal indicated at 26 and shown in detail in Figures 5a and 5b. Again this seal ensures that minimal microwave energy is radiated to the surrounding environment from the rotary joint. The universal multiple short circuiting structure 25, described in detail below, effectively provides an electrical short circuiting of the casting mould 20 to the co-axial centre conductor 24 at the operating frequency of 915 MHz. In this way complete reflection of the microwave radiation is achieved so as to produce standing waves within the mould 20.

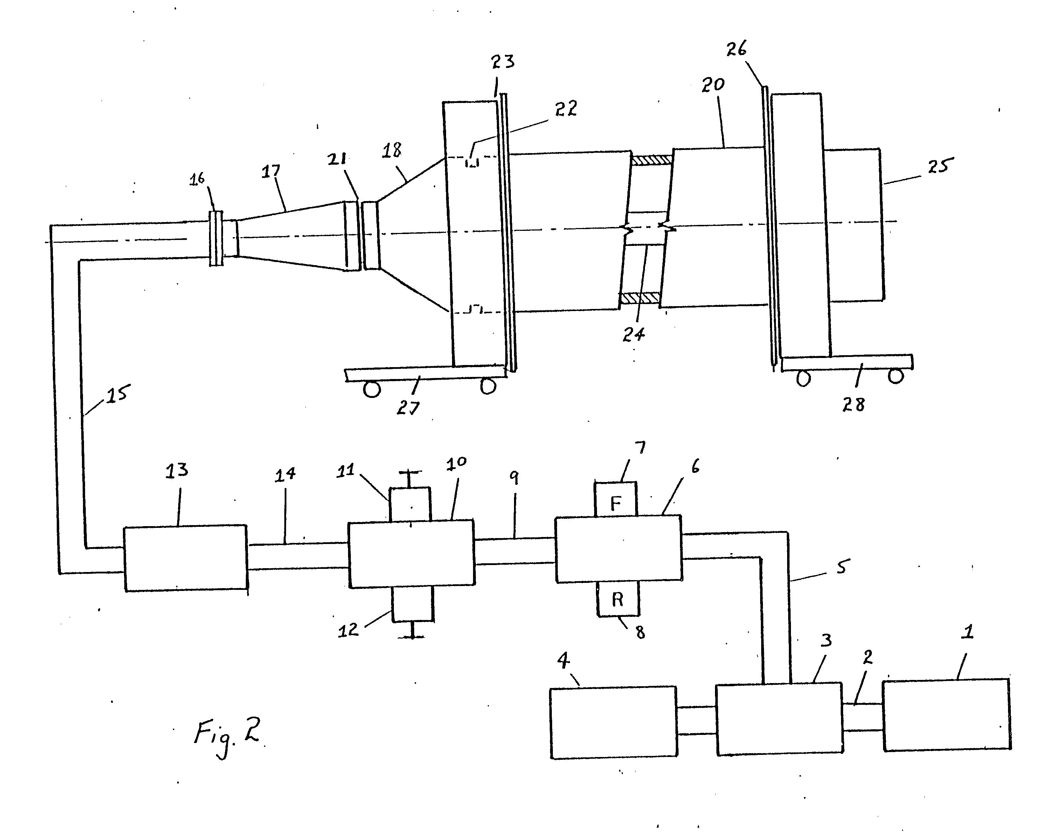

Figure 2 shows an arrangement similar to Figure 1 and the same reference numerals have been used to identify the corresponding parts of the arrangement. In the arrangement of Figure 2 however the mould 20 has a somewhat larger diameter and the transitional waveguide 18 has a considerably greater taper to accommodate the change in diameter from tapered line 17 to the mould 20. This modification requires only a change in the transitional waveguide 18 which, as described above, is longitudinally split for ease of removal.

In both Figures 1 and 2 the generator 1, and the whole of the ensuing waveguide system up to and including transitional waveguide 18 and centre conductor 24 are mounted on a moveable carriage schematically at 27. This allows movement of the microwave system in a direction parallel to the axis of mould 20 so that the system can be displaced from the mould when not required as will be described below. Similarly, short circuit 25 is mounted on a moveable carriage schematically shown at 28 for movement in a direction parallel to the axis of mould 20.

Figure 3a is an enlarged and simplified view of part of Figure 1 showing the transitional waveguide 28 and non contacting joint 21 and non-contacting rotary joint 22 in greater detail without the surrounding labyrinth radiation seal 23. As will be seen from the drawing the doubly-choked rotary joint 21 comprises an inner spigot 29 extending from co-axial line 17 into a cylindrical flange 30 extending from tapered coupling 18 and having a length of $\frac{\lambda}{4}$ where $\lambda$ is the wavelength of the microwave radiation in the waveguide. That is, the flange 30 overlaps the spigot 29. A further flange 31 extends circumferentially around spigot 29 for a distance of

$\frac{\lambda}{4}$ approximately half the length of the spigot. When spigot 29 is nested within flange 30 the ends of flanges 30 and 31 are opposed and closely adjacent. The clearances between the respective surfaces and ends are about 5 mm. In this way a doubly choked non-contacting joint is formed which provides a short circuit to microwave radiation across gap 32 so that the waveguide structure is electrically continuous to the microwave radiation.

Additionally, the joint 21 is formed by the nesting of spigot 29 within flange 30.

The non-contacting rotary joint 22 is identical in form of the joint 21 and the corresponding parts are labelled 29a, 30a, 31a and 32a. Unlike joint 21 however, the parts of the joint associated with mould 20 rotate with the mould whilst the parts of the joint associated with transitional waveguide 18 remain stationary. The joint to be readily disassembled by drawing tapered line 17 and transitional waveguide 18 away from mould 20 in a direction parallel to their longitudinal axes which are coincident with the longitudinal axis of mould 20. This facilitates easy separation of the waveguide system from the rotating mould.

Figure 3b provides the same view as Figure 3a in relation to Figure 2. The only difference in this arrangement is that the transitional tapered waveguide 18 has a greater taper to conform with the increased diameter of mould 20. Again corresponding parts are indicated by the same reference numerals. The joint 21 and rotary joint 22 are identical to those described in relation to Figure 3a.

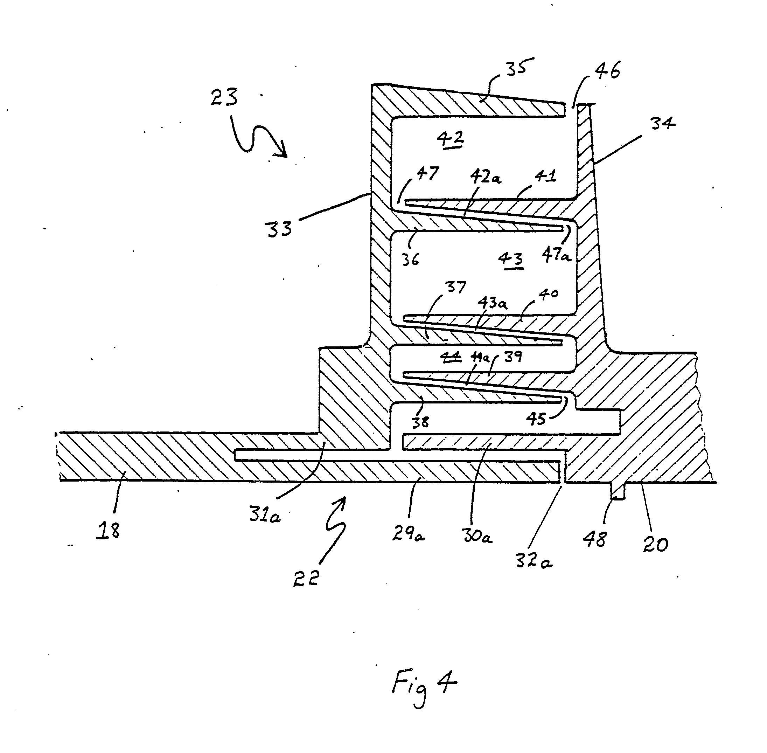

Figure 4 shows an enlarged sectional view of the rotary joint 22 and surrounding secondary labyrinth radiation seals 23. The radiation seals 23 and 26 are identical in form and only seal 23 will be described in detail. The seal 23 consists of two interengaging portions 33 and 34 respectively forming part of transitional tapered waveguide 18 and mould 20. Formation 33 has four cylindrical flanges 35, 36, 37, 38 concentrically arranged with the longitudinal axis of the mould 20. Formation 34 has three similar cylindrical flanges 39, 40, 41 concentrically arranged with respect to the longitudinal axis of mould 20 and extending in an opposing direction to the flanges 35, 36, 37, 38. The flanges are arranged such that six sections of co-axial transmission line 42, 42a, 43, 43a, 44, 44a are formed which connect electrically in cascade. Outermost co-axial line section 42 is formed between outermost flange 35 and closely adjacent flange 41. The next co-axial line section 42a is formed between flanges 41 and 36. Co-axial line section 43 is formed between flanges 36 and 40, while co-axial line section 43a is formed between flanges 40 and 37. Similarly, co-axial line section 44 is formed between flanges 37 and 39, while co-axial line section 44a is formed between flanges 39 and 38.

Transmission line sections 42, 43 and 44 provide transmission paths of high characteristic impedance relative to the respective characteristic impedances of transmission line sections 42a, 43a and 44a. The arrangement of transmission line sections 42, 42a, 43, 43a, 44, 44a provides a stepwise transformation from the open circuit at the gap 46, between the outermost flange 35 and formation 34, to a near short circuit at the gap 45, between the innermost flange 38 and the formation 34. The transmission line section 42 is dimensioned so that the high impedance at 46 is transformed to a lower impedance at gap 47 between flange 41 and formation 33. The impedance at gap 47 is transformed to an even lower impedance at gap 47a between flange 36 and formation 34. This requires the axial dimension of each transmission line section to be λ/4 where λ is the wavelength of the radiation to be presented with the impedance transformations. Similar impedance transformations are made across each of the remaining pairs of transmission line sections 43, 43a and 44, 44a. The three pairs of transmission line sections 42 and 42a, 43 and 43a, 44 and 44a connected in cascade act as a bandstop filter at the radiation frequency at which the axial dimensions are equal to λ/4. The dimensions of the transmission line sections are selected to provide an effective bandstop filter to all 915 MHz band microwave radiation thus providing an effective radiation seal for the purposes of preventing radio frequency interference and ensuring personnel safety.

An annular dam ring 48 is provided at the end of mould 20 to prevent casting material (not shown) from flowing axially out of the mould and into rotary joint 22.

Figure 5a shows the short circuit device 25 in greater detail. The short circuit device is a universal multiple short circuiting structure in that it can be used with moulds 20 the two different sizes shown in Figures 1 and 2 as well as providing the necessary short circuit to both the mould 20 and centre conductor 24. A doubly-choked rotary joint 49 is provided to couple pipe 20 with the short circuiting structure 25. The rotary joint 49 which is identical to the type described above with reference to Figure 3a and 3b is formed by a cylindrical flange 50 extending from mould 20, together with a spigot 51 and cylindrical flange 52 extending from a cylindrical formation 53 forming part of short circuit 25. A labyrinth rotary radiation seal 26 of the kind described with reference to Figure 4 surrounds the rotary joint 49 to minimize radiation leakage.

Centre conductor 24 has at its free end a cylindrical portion 54 of reduced diameter from which a small diameter pin 55 projects. An inner cylindrcal formation 56 forming part of short circuit 25 is concentric with the axis rotating mould 20 and hence centre conductor 24. Formation 56 includes a spigot 57 which surrounds narrowed portion 54 of centre conductor 24. Spigot 57 also surrounds a cylindrical projection 58 of the same diameter and in end to end relationship to portion 54 of centre conductor 24. The overlap of spigot 57 with each of portion 54 and projection 58 is ¼ so that a doubly choked joint is formed and gap 59 between centre conductor 24 and spigot 57 appears electrically continuous to 915 MHz band radiation. Pin 55 has a length of ¼ so as to provide an open circuit at its end and fits into an insulating bush 60 in formation 56 for alignment purposes. Bush 60 is longer than spigot 55 to minimise field leakage. The end of pin 55 and bush 60 are tapered to facilitate ease of engagement. It will be apparent that all of the rotary seals are formed by intermeshing of parts respectively associated with the mould 20, centre conductor 24 and short circuit 25 so that the short circuit 25 can be withdrawn from engagement with the centre conductor 24 and pipe 20 by movement in a direction parallel to the longitudinal axis of mould 20.

An annular dam ring 61 is provided at the end of mould 20 to prevent casting material (not shown) from flowing axially out of the mould and into the short circuiting device 25.

Figure 5b is a view similar to Figure 5a showing the arrangement of the short circuit in an apparatus of the kind shown in Figure 2. In this arrangement the mould 20 has a larger diameter and the doubly-choked joint 49 is formed in an identical manner closer to the labyrinth seal 26 by cylindrical flange 50a extending from mould 20, spigot 51a extending from short circuit 25, and flange 52a formed by part of short circuit 25. The presence of the additional cylindrical formation 53 for use with the smaller diameter mould has only a minimal effect on the total field structure and hence introduces only minimal mode generation.

In use, the apparatus of this invention operates as follows. When the building of a pipe according to the known process is completed and the pipe is ready to be cured, the movable carriages 27, 28 are relocated close to the rotating mould 20. The centre conductor 24 is inserted through the rotating mould 20 until it engages with the universal, multiple short circuiting structure 25. When this is done, rotating portions of the labyrinth seals 23, 26 at either end of the mold 20 are engaged with the corresponding non-rotating portions of the labyrinth seals. In the same action the doubly-choked rotary joints are established. The operating clearances between rotating and non-rotating surfaces of noncontacting, doubly-choked rotary joints and sets of labyrinth seals are about 5mm.

When the apparatus has been positioned as described above, the microwave generator 1 is used to send microwave radiation along the waveguide system and into the rotating mould 20. The amount of energy delivered is measured using the power level meters 7 and 8 and is adjusted using a magic tee tuning device 10 with tuning short circuits 11 and 12. The operation of the microwave generator 1 is adjusted using electronic control circuitry of known type associated with the magnetron power supply (not shown). When sufficient energy has been applied to the pipe material in the rotating mould 20, the microwave generator 1 is turned off and the movable carriages are used to retract the microwave system from the rotating mould 20.

The use of the TEM mode in applying microwave energy to the pipe casting material has a number of advantages since the presence of coaxial waveguide modes together with the TEM coaxial transmission line mode would introduce deleterious effects. For example:

(a) The guide wavelengths of different propagating modes are in general different. To introduce microwave energy in more than one propagating mode in the transmission structure would have the effect of causing the axial distribution of microwave energy in the transmission structure, especially in the region of the rotating mould, to be uneven, due to constructive and destructive interference between these propagating modes. The net effect would be to produce an axial distribution featuring regions of high and low energy density with resulting regions of high and low energy dissipation within the pipe casting material.

(b) The surface currents associated with the co-axial transmission line (TEM) mode are axial. Interruptions to the integrity of a conducting surface carrying an axial current will only be accompanied by an electrical effect if the interruption is such as to interrupt normal current flow. Accordingly mechanical structures supporting co-axial transmission line modes may be split axially without noticeable electrical effect. This property has been used in the transitional waveguide 18. Its construction as a split structure enables rapid replacement as required, without the necessity for its removal over the full axial length of the inner conductor, as would be the case with an unsplit structure.

It will be apparent that all surface interruptions other than the axial splits mentioned in (b) above are disposed at constant axial position with respect to the transmission structure. Each interruption is choked such that electrically the surface appears continuous at 915 MHz. Co-axial surface currents for the TEM mode cross the surface interruption axially. The interrupted surface current magnitude is constant at each point on the interruption. Hence the complete axial and circumferential symmetry of the electrical structure tends to inhibit co-axial waveguide mode generation since co-axial waveguide mode surface currents are not circumferentially constant.

It will also be appreciated that the electric field vector of the co-axial transmission line mode in a symmetrical structure, as presented by the rotating mould 20 and centre conductor 24, is precisely radial. Hence any surface which is co-axial with the axis of the spinning mould 20 and centre conductor 24 will be an equipotential surface. A thin conducting surface placed on an equipotential surface will not interfere with the radial potential distribution of the co-axial structure. This property has been used in the universal, multiple short circuiting structure 25. The presence of the cylinder 53 in the active region of the universal, multiple short circuiting structure when it is used with the larger mould 20 shown in Figure 5(b) will have minimal effect on the total field structure and hence will introduce minimal mode generation.

Although the foregoing specific description describes the invention with reference to the 915 MHz microwave radiation band it will be appreciated that the invention can be used with microwave energy of any suitable frequency by appropriate modification of the dimensions of the apparatus.

## Claims

1. Apparatus for centrifugal casting of hollow articles, the apparatus comprising a hollow rotatable mould (20), means (1) for generating microwave radiation and transmission means (2 to 16) for directing said microwave radiation into the mould (20) whilst the mould is rotating to heat casting material disposed therein.

2. Apparatus as claimed in claim 1, wherein said hollow mould (20) has a substantially open end into which said microwave radiation is directed.

3. Apparatus as claimed in claim 2, wherein said hollow mould (20) is elongate and generally cylindrical with two substantially open ends.

4. Apparatus as claimed in claim 3, wherein said mould (20) acts as a waveguide for the propagation of said microwave radiation.

5. Apparatus as claimed in claim 3 or claim 4, wherein said microwave energy directed into said hollow mould (20) is substantially TEM mode radiation.

6. Apparatus as claimed in claim 5, comprising a centre conductor (24) extending within and along the length of said hollow mould (20).

7. Apparatus as claimed in claim 6, wherein said centre conductor (24) and said mould (20) are terminated at one of said open ends by a short circuit (25) to said microwave radiation so that said radiation is reflected to produce standing waves.

8. Apparatus as claimed in claim 6 or claim 7, wherein said transmission means comprises a waveguide system including a transition waveguide section (18) to couple to an open end of said mould (20), said open end and said transition section (18) being coupled by a non-contacting rotary joint (22).

9. Apparatus as claimed in claim 8, wherein said transition waveguide section (18) is split (19, 19a) longitudinally to facilitate rapid replacement with a like transition waveguide section to accommodate different size hollow moulds.

10. Apparatus as claimed in claim 8 or claim 9, wherein said rotary joint is a doubly-choked joint (22).

11. Apparatus as claimed in claim 10, wherein said doubly-choked rotary joint (22) is formed by a hollow cylindrical spigot (29a) overlapped by opposing flanges (30a, 31a).

12. Apparatus as claimed in claim 10 or claim 11, wherein said doubly-choked rotary joint (22) is surrounded by a labyrinth radiation seal (23).

13. Apparatus as claimed in claim 12, wherein said labyrinth radiation seal (23) comprises a plurality of concentric cylindrical cavities formed by intermeshing cylindrical flanges (35 to 41).

14. Apparatus as claimed in any one of claims 5 to 13, wherein said waveguide system includes a mode transducer (13) for changing the mode of propagation of said microwave radiation from the $TE_{10}$ to TEM mode.

15. Apparatus as claimed in claim 14, wherein said waveguide system includes a section (15) of slowly tapering co-axial line interposed between said mode transducer (13) and said transition waveguide section (18) for acting as a mode filter.

16. Apparatus as claimed in claim 8, wherein said means (1) for generating microwave radiation, said waveguide system and said centre conductor (24) are mounted on a movable carriage (27) permitting selective positioning of the waveguide system in coupling disposition with one end of the mould (20) such that the centre conductor (24) extends internally along the length of the mould (20).

17. Apparatus as claimed in claim 16, wherein said short circuit is provided by a short circuiting structure (25) mounted on a further movable carriage (28) for selective movement into operative engagement with the open end of said mould (20) remote from said waveguide system and a free end of said central conductor (24).

18. A method of centrifugal casting of hollow articles, the method comprising the steps of placing a casting composition in a hollow rotating mould (20) and directing microwave radiation into said rotating mould (20) to heat the casting material.

19. A method as claimed in claim 18, wherein said microwave radiation is substantially TEM mode radiation.

20. A method as claimed in claim 19, comprising the step of establishing standing waves of microwave radiation within said mould (20).

21. A method as claimed in claim 19 or claim 20, comprising the step of introducing a centre conductor (24) to extend axially along said mould (20) and form a coaxial structure therewith.

Fig.1

EP 0 366 502 A2

Fig. 2

Fig 3b.

Fig 3a

EP 0 366 502 A2

Fig 4

Fig 5b.

Fig 5a.